# EUROPÄISCHE PATENTSCHRIFT

(11) **EP 2 917 600 B1**
(45) Veröffentlichungstag und Bekanntmachung des Hinweises auf die Patenterteilung: **11.12.2019**
(21) Anmeldenummer: 13794801.4
(22) Anmeldetag: 14.10.2013
(51) Int. Cl.: F16D 13/58

(54) **KUPPLUNGSVORRICHTUNG**
CLUTCH DEVICE
DISPOSITIF D'EMBRAYAGE

(30) Priorität: 09.11.2012 DE 102012220460
(43) Veröffentlichungstag der Anmeldung: 16.09.2015
(73) Patentinhaber: Schaeffler Technologies AG & Co. KG, 91074 Herzogenaurach (DE)
(72) Erfinder: LORAN, Igor, 77839 Lichtenau (DE); RABER, Christoph, 66564 Ottweiler-Steinbach (DE); WITTMANN, Christoph, 77815 Bühl (DE)
(86) Internationale Anmeldenummer: PCT/DE2013/200223
(87) Internationale Veröffentlichungsnummer: WO 2014/071933

(56) Entgegenhaltungen:
- EP-A1- 2 028 381
- EP-A1- 2 048 397
- WO-A1-2013/139571
- DE-A1-102013 200 556
- US-A- 5 647 468
- US-A- 005 476 166

## Beschreibung

Die vorliegende Erfindung betrifft eine Kupplungsvorrichtung, insbesondere für einen Antriebsstrang eines Kraftfahrzeugs, gemäß dem Oberbegriff des Patentanspruchs 1.

Aus der DE 44 20 251 A1 ist eine Kupplungsvorrichtung mit einer Gegendruckplatte und einer durch eine Tellerfeder in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte bekannt. Ein Kupplungsdeckel weist mehrere Laschenabschnitte auf, durch die die Tellerfeder unter Zwischenlage zweier Drahtringe am Kupplungsdeckel verkippbar befestigt ist.

Aus der US 5,476,166 ist eine Kupplungsvorrichtung bekannt, die auf den Oberbegriff des Patentanspruchs 1 lesbar ist. Gleiches gilt für die EP 2 028 381 A1.

Es ist Aufgabe der vorliegenden Erfindung, eine hinreichend steife Kupplungsvorrichtung anzugeben, die kostengünstig hergestellt werden kann.

Erfindungsgemäß gelöst wird diese Aufgabe durch eine Kupplungsvorrichtung gemäß Patentanspruch 1 mit einer Gegendruckplatte und einer durch zumindest ein Hebelelement in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte, wobei die Gegendruckplatte zumindest einen sich im Wesentlichen in axialer Richtung erstreckenden Laschenabschnitt aufweist, mit dem ein Deckelbauteil verbunden ist.

Insbesondere ist die Kupplungsvorrichtung für einen Antriebsstrang eines Kraftfahrzeugs geeignet.

Durch den Laschenabschnitt, der einteilig mit der Gegendruckplatte ausgebildet ist, und durch das mit dem Laschenabschnitt verbundenen Deckelbauteil kann die Kupplungsvorrichtung zum einen kostengünstig hergestellt werden, und weist zum anderen insbesondere durch das Deckelbauteil eine hinreichende Stabilität auf. Ferner wird eine Kupplungsvorrichtung, insbesondere beim Ersatz einer anderen Kupplungsvorrichtung, beispielsweise in Werkstätten, üblicherweise mit Gegenkraft montiert, was zu einer Verformung des Kupplungsdeckels führen kann. Durch diese Verformung verschiebt sich der Betriebspunkt der Kupplungsvorrichtung, was in den wenigsten Werkstätten kompensiert werden kann. Da bei der erfindungsgemäßen Kupplungsvorrichtung das Deckelbauteil mit dem sich in axialer Richtung erstreckenden Laschenabschnitt verbunden ist, weist die erfindungsgemäße Kupplungsvorrichtung eine hinreichende Steifigkeit auf, und ist insbesondere für den Reparatureinsatz in Werkstätten geeignet.

Bevorzugte Ausführungsbeispiele der vorliegenden Erfindung sind in den abhängigen Ansprüchen dargelegt.

Die Gegendruckplatte weist eine Reibfläche auf, mit der die Kupplungsscheibe beim Einrücken der Kupplungsvorrichtung in reibschlüssige Anlage bringbar ist. Das Deckelbauteil ist auf einer Stirnseite des sich im Wesentlichen rechtwinklig zur Reibfläche der Gegendruckplatte erstreckenden Laschenabschnitts angeordnet. Vorzugsweise befindet sich dabei das Deckelbauteil in unmittelbarer Anlage mit der Stirnseite des Laschenabschnitts. Der Laschenabschnitt ist mittels einer ein- oder mehrstufigen Umformung hergestellt, wobei es insbesondere von Vorteil ist, wenn die gesamte Gegendruckplatte mittels Umformung aus einer Blechplatine, insbesondere einer Stahlblechplatine, hergestellt ist. Dies ermöglicht eine besonders kostengünstige Herstellung der Kupplungsvorrichtung.

Es ist möglich, dass die Kupplungsvorrichtung nur ein einziges, integrales Hebelelement aufweist. Dieses Hebelelement kann bei einer normal-eingerückten Kupplungsvorrichtung als im Wesentlichen ringförmige Tellerfeder und bei einer normal-ausgerückten Kupplungsvorrichtung als im Wesentlichen ringförmige Hebelfeder ausgebildet sein. Ebenso ist es möglich, dass die Kupplungsvorrichtung mehrere separate, in Umfangsrichtung voneinander beabstandete Hebelelemente aufweist. Allen vorgenannten Hebelelementen ist es gemeinsam, dass sie jeweils zumindest eine Hebelzunge aufweisen, durch die das Hebelelement bzw. die Hebelelemente durch eine Aktoreinrichtung zum Ausrücken und/oder zum Einrücken der Kupplungsvorrichtung betätigbar, das heißt verkippbar ist, bzw. sind. Die Hebelzungen sind vorzugsweise in radialer Richtung innerhalb der Kupplungsvorrichtung, insbesondere vorzugsweise nahe dem Drehzentrum der Kupplungsvorrichtung, angeordnet.

Gemäß einem bevorzugten Ausführungsbeispiel weist die Gegendruckplatte mehrere in Umfangsrichtung der Kupplungsvorrichtung voneinander beabstandete Laschenabschnitte auf, die einteilig mit der Gegendruckplatte ausgebildet sind und auf einer Kreisbahn angeordnet sind. Vorzugsweise sind die Laschenabschnitte in Umfangsrichtung gleichmäßig voneinander beabstandet, wodurch ein gleichmäßiges Einrückverhalten und/oder Ausrückverhalten der Kupplungsvorrichtung erzielt werden kann.

Es ist von Vorteil, wenn die Laschenabschnitte in radialer Richtung außerhalb einer Reibfläche der Gegendruckplatte angeordnet sind. Diese ermöglicht zum einen einen besonders kompakten Aufbau der Kupplungsvorrichtung, und ermöglicht zum anderen eine vorteilhafte Abstützung des Hebelelements bzw. der Hebelelemente.

Weiterhin ist es von Vorteil, wenn durch jeden Laschenabschnitt ein separates Hebelelement verkippbar gelagert ist. Auf ein komplex ausgebildetes, ringförmiges Hebelelement mit mehreren in radialer Richtung innen angeordneten Hebelzungen kann somit verzichtet werden. Die separaten Hebelelemente können kostengünstig hergestellt und montiert werden.

Gemäß einem besonders bevorzugten Ausführungsbeispiel ist in die Stirnseite des Laschenabschnitts ein Loch eingebracht, mittels dessen das Deckelbauteil mit der Gegendruckplatte verbindbar ist. Vorzugsweise handelt es sich bei dem Loch um ein Sackloch. Insbesondere ist es von Vorteil, wenn das Loch, insbesondere das Sackloch, mittels eines Dornwerkzeugs in die Stirnseite des Laschenabschnitts eingedornt ist. Dies ermöglicht eine besonders kostengünstige Herstellung der Kupplungsvorrichtung, da bei der Lochherstellung auf spanende Verfahren verzichtet werden kann.

Weiterhin ist es von Vorteil, wenn das Deckelbauteil mittels einer im Loch eingebrachten Schraube mit der Gegendruckplatte verbunden ist. Vorzugsweise handelt es sich bei der Schraube um eine selbstfurchende Schraube, wodurch es nicht erforderlich ist, in einem separaten Verfahrensschritt ein Gewinde in das Loch hineinzuschneiden. Auch dies ermöglicht eine Verringerung der Herstellkosten der Kupplungsvorrichtung.

Gemäß einem weiteren bevorzugten Ausführungsbeispiel erstreckt der Laschenabschnitt sich in axialer Richtung durch die Anpressplatte hindurch. Vorzugsweise liegt der Laschenabschnitt zur Übertragung eines Drehmoments auf die Anpressplatte in einer Durchbrechung der Anpressplatte an. Die anpressplattenseitige Durchbrechung ist insbesondere in radialer Richtung außerhalb einer Reibfläche der Anpressplatte, mit der die Kupplungsscheibe beim Einrücken der Kupplungsvorrichtung in reibschlüssige Anlage bringbar ist, angeordnet. Es ist von Vorteil, wenn die Anpressplatte eine der Anzahl und Position der Laschenabschnitte entsprechende Anzahl von Durchbrechungen an denen den Laschenabschnitten entsprechenden Positionen aufweist. Daher sind die Durchbrechungen vorzugsweise in Umfangsrichtung gleichmäßig voneinander beabstandet auf einer Kreisbahn angeordnet.

Zur Drehmomentübertragung ist es von Vorteil, wenn in Umfangsrichtung gegenüberliegende Flanken des jeweiligen Laschenabschnitts mit Rändern der jeweiligen Durchbrechung der Anpressplatte in unmittelbarer Anlage sind. Bei dieser Anlage ist zu beachten, dass eine Spielpassung vorteilhaft ist, um die axiale Verlagerbarkeit der Anpressplatte bezüglich der Gegendruckplatte zu begünstigen und gleichzeitig das Drehmoment zu übertragen. Auch ist es möglich, dass weitere Bauteile oder Bauteilabschnitte in Umfangsrichtung zwischen der jeweiligen Flanke des Laschenabschnitts und dem jeweiligen Rand der Durchbrechung angeordnet sind.

Vorzugsweise erstreckt der Laschenabschnitt sich in axialer Richtung durch das Hebelelement hindurch. Weiterhin vorzugsweise ist das Hebelelement durch Anlage am Laschenabschnitt zumindest in Umfangsrichtung ausgerichtet. Auch hierdurch ist eine Drehmomentübertragung, insbesondere mittels Spielpassung, möglich.

Gemäß einem weiteren bevorzugten Ausführungsbeispiel weist das Hebelelement zumindest einen Federabschnitt auf, der sich zur Vorspannung des Hebelelements und/oder zur Zentrierung des Hebelelements mit dem Deckelbauteil in Eingriff befindet. Hierzu ist das Deckelbauteil beispielsweise mit einer Eingriffsöffnung ausgestattet, in die ein freies, mit einem Hakenabschnitt versehenes Ende des Federabschnitts eingreift. Insbesondere bilden die deckelbauteilseitige Eingriffsöffnung und der hebelelementseitige Kragenabschnitt eine Verliersicherung, um das Hebelelement verliersicher am Deckelbauteil zu halten, was insbesondere bei der Montage der Kupplungsvorrichtung von Vorteil ist. Wie die Bezeichnung "Federabschnitt" andeutet, weist der Federabschnitt des Hebelelements eine höhere Elastizität als die restlichen Bereiche des Hebelelements, insbesondere die bereits zuvor erwähnte Hebelzunge sowie die nachfolgend zu erläuternden Hebelarme, auf.

Es ist von Vorteil, wenn das Deckelbauteil ringförmig ausgebildet ist. Insbesondere ist es von Vorteil, wenn zumindest ein sich in axialer Richtung und/oder in radialer Richtung der Kupplungsvorrichtung erstreckender Zentrierabschnitt am Deckelbauteil vorgesehen ist, der das Hebelelement zentriert. Dieser Zentrierabschnitt ist vorzugsweise an einem Innenrand des ringförmigen Deckelbauteils ausgebildet. Ferner greift dieser Zentrierabschnitt vorzugsweise in das Hebelelement ein, insbesondere vorzugsweise in einer Aussparung zwischen zwei benachbarten Hebelarmen des Hebelelements. Hierbei ist es von Vorteil, wenn sich in dieser Aussparung der bereits zuvor erwähnte Federabschnitt des Hebelelements befindet, der seinerseits auf dem Deckelbauteil unter Vorspannung aufliegt und insbesondere in die deckelbauteilseitige Eingriffsöffnung eingreift, die auf demselben Radialstrahl wie der Zentrierabschnitt angeordnet ist.

Gemäß einem weiteren bevorzugten Ausführungsbeispiel weist das Hebelelement zumindest einen Hebelarm auf, der in die Anpressplatte eingreift. Vorzugsweise greift der Hebelarm in die Anpressplatte in, um die Kupplungsvorrichtung auszurücken, wenn die Hebelzunge des Hebelelements durch die Aktoreinrichtung betätigt wird. Der Hebelarm greift insbesondere vorzugsweise in einen in radialer Richtung außen ausgebildeten Kragenabschnitt der Anpressplatte ein. Der Kragenabschnitt erstreckt sich in axialer Richtung der Kupplungsvorrichtung und ist vorzugsweise mittels Umformung hergestellt. Hierdurch ist es möglich, die Anpressplatte aus einer Blechplatine, insbesondere einer Stahlblechplatine, herzustellen, wodurch die Herstellkosten der Kupplungsvorrichtung weiter verringert werden können.

Der Kragenabschnitt ist vorzugsweise in Umfangsrichtung umlaufend ausgebildet und mit entsprechenden Eingriffsöffnungen für die Hebelelemente, genauer gesagt die Hebelarme der Hebelelemente, versehen. Diese Eingriffsöffnungen können von den Durchbrechungen, durch die sich die gegendruckplattenseitigen Laschenabschnitte in axialer Richtung hindurch erstrecken, getrennt ausgebildet sein, sind jedoch vorzugsweise pro Hebelelement als gemeinsame Eingriffsöffnung und Durchbrechung ausgebildet. Der äußere Kragenabschnitt bildet somit einen Abhubanker für die Hebelelemente der vorzugsweise normal-eingerückten Kupplungsvorrichtung. Ferner ist es durch eine entsprechende Gestaltung auch möglich, das Drehmoment von den Laschenabschnitten der Gegendruckplatte kommend teilweise oder vollständig über die Hebelarme der Hebelelemente durch Anlage der Hebelarme in den Eingriffsöffnungen in Umfangsrichtung auf die Anpressplatte zu übertragen.

Gemäß einem weiteren bevorzugten Ausführungsbeispiel ist eine ringförmige Tellerfeder zwischen dem Hebelelement und der Anpressplatte zur Vorspannung der Anpressplatte in axialer Richtung angeordnet. Vorzugsweise liegt die Tellerfeder in ihrem radialen Außenbereich am Hebelelement und in ihrem radialen Innenbereich an der Anpressplatte an. Hierbei ist es insbesondere von Vorteil, wenn die Anpressplatte zur Anlage der Tellerfeder eine, vorzugsweise mehrere in Umfangsrichtung voneinander beabstandete Sicken aufweist. Weiterhin ist es von Vorteil, wenn die Tellerfeder durch einen in radialer Richtung innen ausgebildeten, sich in axialer Richtung erstreckenden Kragenabschnitt der Anpressplatte zentriert ist. Vorzugsweise ist der Kragenabschnitt mittels Umformung hergestellt, so dass die Anpressplatte auf kostengünstige Art und Weise aus einer Blechplatine, insbesondere einer Stahlblechplatine, hergestellt werden kann.

Die Tellerfeder ist gemäß einem bevorzugten Ausführungsbeispiel in radialer Richtung innerhalb der auf einer Kreisbahn angeordneten Laschenabschnitte angeordnet. Dies ermöglicht einen besonders kompakten Aufbau der Kupplungsvorrichtung.

Es ist von Vorteil, wenn die Gegendruckplatte zumindest einen Befestigungsabschnitt zur drehfesten Verbindung mit einem Eingangsbauteil, vorzugsweise einem Schwungrad oder der Sekundärmasse eines Zweimassenschwungrads, aufweist. Beispielsweise kann die Verbindung als eine oder mehrere Nietverbindungen erfolgen.

Weiterhin ist es von Vorteil, wenn die Gegendruckplatte mehrere in Umfangsrichtung, vorzugsweise gleichmäßig, voneinander beabstandete Befestigungsabschnitte aufweist, die einteilig mit der Gegendruckplatte ausgebildet sind und auf einer Kreisbahn angeordnet sind. Hierdurch kann die Anzahl der Bauteile weiter verringert werden.

Ebenfalls ist es weiterhin von Vorteil, wenn die Befestigungsabschnitte in radialer Richtung außerhalb der Reibfläche der Gegendruckplatte angeordnet sind. Dies ermöglicht zum einen einen besonders kompakten Aufbau der Kupplungsvorrichtung, und stellt zum anderen die Zugänglichkeit der Befestigungsabschnitte nach der Montage der Kupplungsvorrichtung sicher.

Vorzugsweise ist der Laschenabschnitt oder einer der Laschenabschnitte in Umfangsrichtung zwischen zwei benachbarten Befestigungsabschnitten angeordnet. Hierdurch kann die gesamte Gegendruckplatte mit ihren Laschenabschnitten und Befestigungsabschnitten als Blechbauteil in einem kombinierten Stanz- und Umformverfahren hergestellt werden.

Weiterhin vorzugsweise weist die Gegendruckplatte die gleiche Anzahl von Laschenabschnitten und Befestigungsabschnitten auf, wobei die Laschenabschnitte und die Befestigungsabschnitte in Umfangsrichtung abwechselnd angeordnet sind.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Kupplungsvorrichtung mit einer Laschenabschnitte aufweisenden Gegendruckplatte sowie einer Kragenabschnitte aufweisenden Anpressplatte in einer perspektivischen Ansicht,
- Figur 2: die Kupplungsvorrichtung aus Figur 1 in einem Halbschnitt,
- Figur 3: die Gegendruckplatte der Kupplungsvorrichtung aus Figur 1 in einer perspektivischen Ansicht, und
- Figur 4: die Anpressplatte der Kupplungsvorrichtung aus Figur 1 in einer perspektivischen Ansicht.

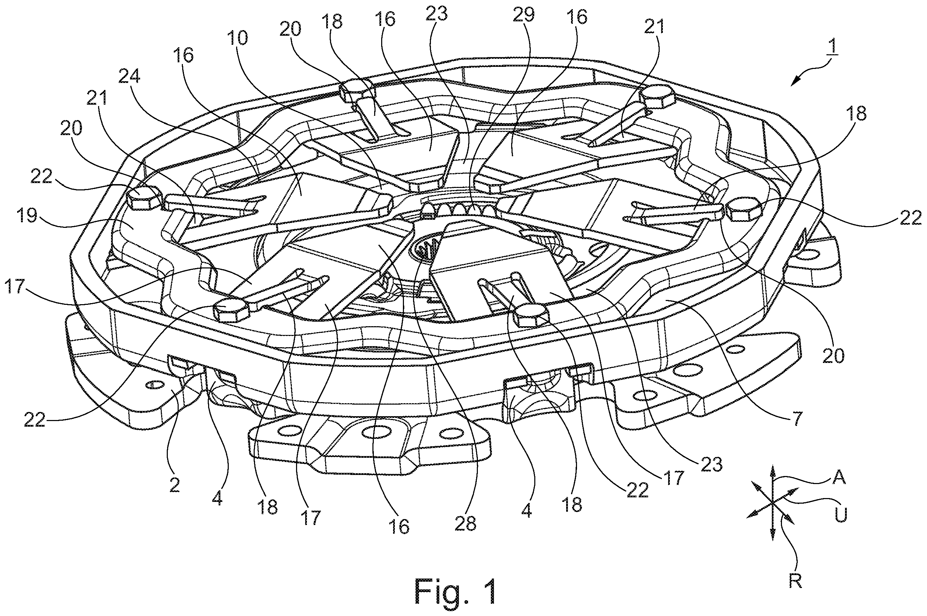

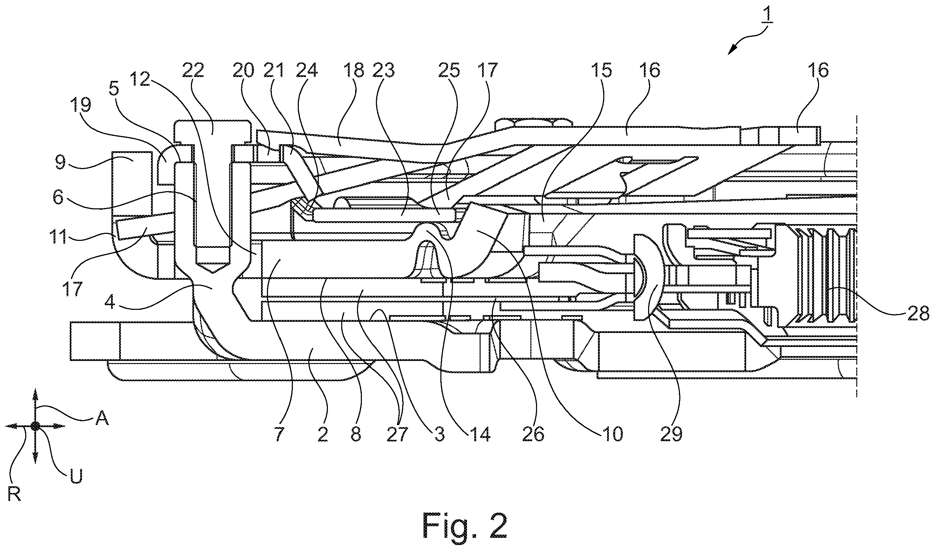

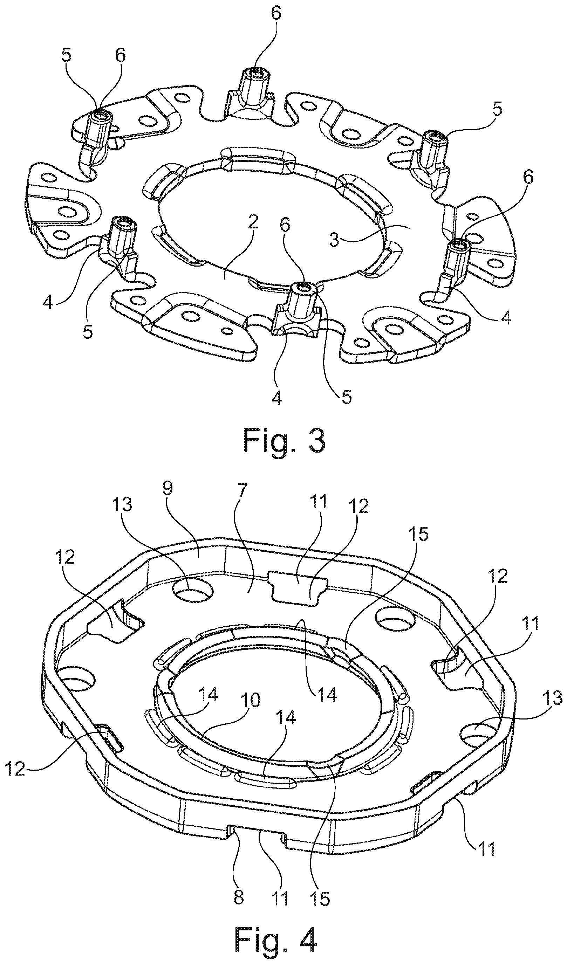

Die Figuren 1 bis 4 betreffen ein bevorzugtes Ausführungsbeispiel einer Kupplungsvorrichtung 1. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1, die Teilkombinationen der im Folgenden zu erläuternden Merkmale aufweist. Insbesondere betrifft die nachfolgende Beschreibung auch eine Gegendruckplatte 2 und eine Anpressplatte 7 für die Kupplungsvorrichtung 1. Die Kupplungsvorrichtung 1 ist insbesondere als Reibungskupplung ausgebildet und für den Antriebsstrang eines Kraftfahrzeugs vorgesehen.

Die Kupplungsvorrichtung 1 weist zumindest eine Gegendruckplatte 2, zumindest eine Anpressplatte 7 und zumindest eine in axialer Richtung A der Kupplungsvorrichtung 1 zwischen der Gegendruckplatte 2 und der Anpressplatte 7 angeordnete Kupplungsscheibe 26 auf. Die Gegendruckplatte 2 definiert eine Eingangsseite der Kupplungsvorrichtung 1, während die Kupplungsscheibe 26 eine Ausgangsseite der Kupplungsvorrichtung 1 definiert. Die Anpressplatte 7 ist bezüglich der Gegendruckplatte 2 drehfest gelagert und in axialer Richtung A begrenzt verlagerbar. Durch die Verlagerung der Anpressplatte 7 in axialer Richtung A ist die Kupplungsscheibe 26 zwischen der Gegendruckplatte 2 und der Anpressplatte 7, genauer gesagt zwischen einer Reibfläche 3 der Gegendruckplatte 2 und einer Reibfläche 8 der Anpressplatte 7, mittels ihrer Reibbeläge 27 reibschlüssig klemmbar, so dass ein Drehmoment von der Eingangsseite der Kupplungsvorrichtung 1 zur Ausgangsseite der Kupplungsvorrichtung 1 übertragen werden kann.

Zusätzlich zu ihren Reibbelägen 27 weist die Kupplungsscheibe 26 eine Nabe 28 auf, die im Drehzentrum der Kupplungsscheibe 26 bzw. im Drehzentrum der Kupplungsvorrichtung 1 angeordnet ist. Ferner weist die Kupplungsscheibe 26 vorzugsweise eine Dämpfungseinrichtung 29 auf, die in radialer Richtung R der Kupplungsvorrichtung 1 zwischen den Reibbelägen 27 und der Nabe 28 angeordnet ist, und die ausgebildet ist, während des Betriebs der Kupplungsvorrichtung 1 auftretende Drehschwingungen zu dämpfen.

Darüber hinaus weist die Kupplungsvorrichtung 1 mehrere Hebelelemente 16 auf, die bezüglich der Gegendruckplatte 2 verkippbar abgestützt und gelagert sind, und die durch eine nicht dargestellte Aktoreinrichtung betätigbar sind. Die einzelnen Hebelelemente 16 sind in Umfangsrichtung U der Kupplungsvorrichtung 1 voneinander beabstandet und erstrecken sich in radialer Richtung R der Kupplungsvorrichtung 1. Jedes der Hebelelemente 16 weist eine Hebelzunge auf, durch die jedes der Hebelelemente 16 durch die Aktoreinrichtung zum Ausrücken und/oder zum Einrücken der Kupplungsvorrichtung 1 betätigbar, das heißt verkippbar ist. Die Hebelzungen sind vorzugsweise in radialer Richtung R innenliegend, das heißt nahe dem Drehzentrum der Kupplungsvorrichtung 1 angeordnet. Jedes der Hebelelemente 16 ist im Bereich eines entsprechenden Laschenabschnitts 4 verkippbar abgestützt und zumindest in Umfangsrichtung U gelagert.

Im dargestellten Ausführungsbeispiel weist die Gegendruckplatte 2 eine Anzahl von Laschenabschnitten 4 auf, die der Anzahl der Hebelelemente 16 entspricht. Die Laschenabschnitte 4 sind in Umfangsrichtung U gleichmäßig voneinander beabstandet und einteilig mit der Gegendruckplatte 2 ausgebildet. Insbesondere sind die Laschenabschnitte 4 auf einer Kreisbahn angeordnet. In radialer Richtung R sind die Laschenabschnitte 4 außerhalb der Reibfläche 3 der Gegendruckplatte 2 und außerhalb der Reibfläche 8 der Anpressplatte 7 angeordnet. Ferner erstrecken sich die Laschenabschnitte 4 im Wesentlichen in axialer Richtung A. Vorzugsweise sind die Laschenabschnitte 4 umformtechnisch aus der ansonsten im Wesentlichen planen Gegendruckplatte 2 ausgebildet, so dass die gesamte Gegendruckplatte 2 vorzugsweise mittels eines kombinierten Stanz- und Umformverfahrens aus einer Blechplatine, insbesondere einer Stahlblechplatine, herstellbar ist.

Ferner weist die Gegendruckplatte 2 mehrere in Umfangsrichtung U gleichmäßig voneinander beabstandete Befestigungsabschnitte auf, die einteilig mit der Gegendruckplatte 2 ausgebildet sind und auf einer Kreisbahn angeordnet sind. Die Befestigungsabschnitte sind in radialer Richtung R außerhalb der Reibfläche 3 der Gegendruckplatte 2 angeordnet. Einer der Laschenabschnitte 4 ist in Umfangsrichtung U zwischen zwei benachbarten Befestigungsabschnitten angeordnet. Insbesondere entspricht im dargestellten Ausführungsbeispiel die Anzahl der Laschenabschnitte 4 der Anzahl der Befestigungsabschnitte, wobei die Laschenabschnitte 4 und die Befestigungsabschnitte in Umfangsrichtung U abwechselnd angeordnet sind. Durch die Befestigungsabschnitte kann die gesamte Kupplungsvorrichtung 1 drehfest mit einem Eingangsbauteil, vorzugsweise einem Schwungrad oder der Sekundärmasse eines Zweimassenschwungrads, beispielsweise mittels mehrerer Nietverbindungen oder mehrerer Schaubverbindungen, verbunden werden.

Die sich in axialer Richtung A erstreckenden Laschenabschnitte 4 der Gegendruckplatte 2 sind mit einem Deckelbauteil 19 verbunden, das im dargestellten Ausführungsbeispiel ringförmig ausgebildet ist. Genauer gesagt ist das Deckelbauteil 19 auf Stirnseiten 5 der sich im Wesentlichen rechtwinklig zur Reibfläche 3 der Gegendruckplatte 2 erstreckenden Laschenabschnitte 4 angeordnet. Das Deckelbauteil 19 befindet sich dabei in unmittelbarer Anlage an den entsprechenden Stirnseiten 5 der Laschenabschnitte 4.

In die Stirnseite 5 des jeweiligen Laschenabschnitts 4 ist ein Loch, vorzugsweise ein Sackloch 6, eingebracht. Insbesondere wird dieses Sackloch 6 mittels eines Dornwerkzeugs spanlos in axialer Richtung A der Kupplungsvorrichtung 1 eingedornt. Mittels einer, vorzugsweise selbstfurchenden, Schraube 22, die in das Sackloch 6 eingeschraubt ist, ist das Deckelbauteil 19 mit der Gegendruckplatte 2, genauer gesagt mit den Laschenabschnitten 4 der Gegendruckplatte 2, verbunden.

Die Laschenabschnitte 4 erstrecken sich in axialer Richtung A außerhalb der anpressplattenseitigen Reibfläche 8 durch die Anpressplatte 7 hindurch. Hierzu sind in der Anpressplatte 7 außerhalb der anpressplattenseitigen Reibfläche 8 Durchbrechungen 12 vorgesehen, die in Anzahl und Position der Anzahl und Position der gegendruckplattenseitigen Laschenabschnitte 4 entsprechen. Somit sind die Durchbrechungen 12 ebenfalls in Umfangsrichtung U gleichmäßig voneinander beabstandet auf einer Kreisbahn angeordnet. Um das Drehmoment von der Gegendruckplatte 2 auf die Anpressplatte 7 zu übertragen, liegen Ränder der Durchbrechungen 12 an in Umfangsrichtung U gegenüberliegenden Flanken der jeweiligen Laschenabschnitte 4, vorzugsweise mittels Spielpassung, an.

Im dargestellten Ausführungsbeispiel weist die Anpressplatte 7 ferner einen in Umfangsrichtung U umlaufenden, äußeren Kragenabschnitt 9 sowie einen in Umfangsrichtung U umlaufenden, inneren Kragenabschnitt 10 auf. Beide Kragenabschnitte 9, 10 dienen der Versteifung der Anpressplatte 7 und erlauben es, die Anpressplatte 7 aus einer Blechplatine, insbesondere einer Stahlblechplatine, mittels Umformung herzustellen.

In radialer Richtung R innerhalb des äußeren Kragenabschnitts 9 ist die Anpressplatte 7 mit Montageöffnungen 13 versehen, um aus Richtung der Aktoreinrichtung einem Montagewerkzeug den Zugang zu den vorgenannten Befestigungsabschnitten zu ermöglichen ohne die Kupplungsvorrichtung 1 zerlegen zu müssen. Die Montageöffnungen 13 sind in Umfangsrichtung U zwischen den Durchbrechungen 12 angeordnet.

Gleichermaßen kann auch das Deckelbauteil 19 im Bereich der anpressplattenseitigen Montageöffnungen 13 Aussparungen oder Durchbrechungen für das Montagewerkzeug aufweisen. Im dargestellten Ausführungsbeispiel sind diese Aussparungen als Einzüge in radialer Richtung ausgebildet, so dass das ringförmige Deckelbauteil 19 eine im Wesentlichen sternförmige Außenkontur aufweist.

Jeder der Laschenabschnitte 4 der Gegendruckplatte 2 erstreckt sich in axialer Richtung A durch das jeweilige Hebelelement 16 hindurch. Hierzu weist im dargestellten Ausführungsbeispiel jedes der Hebelelemente 16 zwei in Umfangsrichtung U voneinander beabstandete Hebelarme 17 auf, die sich im Wesentlichen in radialer Richtung R erstrecken. Die Hebelarme 17 sind in radialer Richtung R außerhalb der Hebelzunge des jeweiligen Hebelelements 16 angeordnet und befinden sich, vorzugsweise mittels Spielpassung, zumindest in Umfangsrichtung U in Anlage an den beiden, in Umfangsrichtung U gegenüberliegenden Flanken des jeweiligen Laschenabschnitts 4. Somit ist zumindest eine Ausrichtung der Hebelelemente 16 in Umfangsrichtung U möglich, wobei zusätzlich eine Übertragung des Drehmoments auf die Hebelelemente 16 möglich ist.

Zusätzlich zu den beiden Hebelarmen 17 weist jedes der Hebelelemente 16 im dargestellten Ausführungsbeispiel einen Federabschnitt 18 auf, der zwischen den beiden Hebelarmen 17 angeordnet ist und der sich, wie auch die beiden Hebelarme 16, in radialer Richtung aus der Hebelzunge erstreckt. Der Federabschnitt 18 weist eine höhere Elastizität als das restliche Hebelelement 16, das heißt insbesondere die Hebelarme 17 sowie die Hebelzunge, auf. Zur Vorspannung des Hebelelements 16 und/oder zur Zentrierung des Hebelelements 16 befindet sich der Federabschnitt 18 mit dem Deckelbauteil 19 in Eingriff. Insbesondere wird jedes der Hebelelemente 16 durch das Deckelbauteil 19 verliersicher gehalten, wobei im dargestellten Ausführungsbeispiel das Deckelbauteil 19 in der Nähe der Schrauben 22, genauer gesagt auf denselben Radialstrahlen wie die Schrauben 22, jeweils eine Eingriffsöffnung 20 aufweist. An seinem freien Ende ist der Federabschnitt 18 des jeweiligen Hebelelements 16 mit einem Hakenabschnitt versehen, der in die Eingriffsöffnung 20 verliersicher eingreift. Jedoch sind auch andere Arten der Verliersicherung möglich, um insbesondere die Montage der Kupplungsvorrichtung 1 zu vereinfachen.

Das ringförmige Deckelbauteil 19 weist ferner Zentrierabschnitte 21 auf, die sich in axialer Richtung A und/oder in radialer Richtung R, vorzugsweise nach innen, erstrecken, um das jeweilige Hebelelement 16 zu zentrieren. Im dargestellten Ausführungsbeispiel greift der jeweilige Zentrierabschnitt 21 mittels Spielpassung zwischen die beiden benachbarten Hebelarme 17 des jeweiligen Hebelelements 16, vorzugsweise mittels Spielpassung, ein, um insbesondere eine Übertragung des von der Gegendruckplatte 2 auf das Deckelbauteil 19 übertragenden Drehmoments auf die Hebelelemente 16 zu ermöglichen.

Obwohl dies nicht dargestellt ist, ist es auch möglich, dass jedes der Hebelelemente 16 beispielsweise nur einen einzigen Hebelarm 17 und/oder zwei oder mehr Federabschnitte 18 aufweist. Insbesondere ist es möglich, dass ein Hebelarm 17 in Umfangsrichtung U zwischen zwei benachbarten Federabschnitten 18 eines Hebelelements 16 angeordnet ist.

Die freien Enden der Hebelarme 17 der jeweiligen Hebelelemente 16 greifen in die Anpressplatte 7, genauer gesagt in den äußeren Kragenabschnitt 9 der Anpressplatte 7 ein. Hierzu weist der äußere Kragenabschnitt 9 der Anpressplatte 7 Eingriffsöffnungen 11 auf, an deren in Umfangsrichtung U einander gegenüberliegenden Rändern entsprechende Kanten der Hebelarme 17, vorzugsweise mittels Spielpassung, anliegen. Auch dies ermöglicht gegebenenfalls eine Übertragung des Drehmoments von den Hebelelementen 16 auf die Anpressplatte 7. Ferner befinden sich die Oberseiten der Hebelarme 17 in Anlage an den Unterseiten der Eingriffsöffnungen 11, so dass dem Kragenabschnitt 9 neben der Versteifung der Anpressplatte 7 auch die Funktion eines Abhubankers bei einer, im Ausführungsbeispiel dargestellten, normal-eingerückten Kupplungsvorrichtung 1 zukommt.

In axialer Richtung A zwischen den Hebelelementen 16 und der Anpressplatte 7 ist eine ringförmige Tellerfeder 23 zur Vorspannung der Anpressplatte 7 in axialer Richtung A angeordnet. Die Tellerfeder 23 ist ausgebildet, die Hebelelemente 16 und die Anpressplatte 7 gegeneinander zu verspannen, so dass bei der im Ausführungsbeispiel dargestellten, normal-eingerückten Kupplungsvorrichtung 1 im betätigungsfreien Zustand die Anpressplatte 7 in reibschlüssiger Anlage mit den Reibbelägen 27 der Kupplungsscheibe 26 besteht, um das Drehmoment von der Eingangsseite der Kupplungsvorrichtung 1 auf die Ausgangsseite der Kupplungsvorrichtung 1, das heißt auf die Nabe 28 der Kupplungsscheibe 26 zu übertragen. In ihrem radialen Außenbereich 24 liegt die Tellerfeder 23 an den Hebelelementen 16, genauer gesagt an den Hebelarmen 17 der Hebelelemente 16, an, während die Tellerfeder 23 in ihrem radialen Innenbereich 25 an der Anpressplatte 7, genauer gesagt an der der Reibfläche 8 in axialer Richtung A gegenüberliegenden Oberfläche der Anpressplatte 7 anliegt. Vorzugsweise ist die Anpressplatte 7 in diesem Bereich mit zumindest einer ringförmigen, im dargestellten Ausführungsbeispiel mehreren, in Umfangsrichtung U voneinander beabstandeten ringsegmentförmigen Sicken 14 ausgestattet. Der Innenbereich 25 der Tellerfeder 23 kann sich somit bei Betätigung der Kupplungsvorrichtung 1 über diese Sicken 14 abwälzen.

Ferner ist im dargestellten Ausführungsbeispiel der innere Kragenabschnitt 10 der Anpressplatte 7, der in radialer Richtung R innerhalb und in Nachbarschaft zu den Sicken 14 ausgebildet ist, mit mehreren Zentrierabschnitten 15 ausgestattet, die sich mit der Innenkante der ringförmigen Tellerfeder 23, die den Innenbereich 25 der Tellerfeder 23 in Anlage befindet, bzw. bei der Betätigung der Kupplungsvorrichtung 1 in Anlage bringbar sind, um die Tellerfeder 23 zu zentrieren.

Die vorangegangenen Ausführungsbeispiele betreffen eine Kupplungsvorrichtung 1, insbesondere für einen Antriebsstrang eines Kraftfahrzeugs, mit einer Gegendruckplatte 2 und einer durch zumindest ein Hebelelement 16 in axialer Richtung A der Kupplungsvorrichtung 1 begrenzt verlagerbaren Anpressplatte 7 zur reibschlüssigen Klemmung einer Kupplungsscheibe 26 zwischen der Gegendruckplatte 2 und der Anpressplatte 7, wobei die Gegendruckplatte 2 zumindest einen sich im Wesentlichen in axialer Richtung A erstreckenden Laschenabschnitt 4 aufweist, mit dem ein Deckelbauteil 19 verbunden ist.

### Bezugszeichenliste

- 1: Kupplungsvorrichtung
- 2: Gegendruckplatte
- 3: Reibfläche
- 4: Laschenabschnitt
- 5: Stirnseite
- 6: Sackloch
- 7: Anpressplatte
- 8: Reibfläche
- 9: äußerer Kragenabschnitt
- 10: innerer Kragenabschnitt
- 11: Eingriffsöffnung
- 12: Durchbrechung
- 13: Montageöffnung
- 14: Sicke
- 15: Zentrierabschnitt
- 16: Hebelelement
- 17: Hebelarm
- 18: Federabschnitt
- 19: Deckelbauteil
- 20: Eingriffsöffnung
- 21: Zentrierabschnitt
- 22: Schraube
- 23: Tellerfeder
- 24: Außenbereich
- 25: Innenbereich
- 26: Kupplungsscheibe
- 27: Reibbelag
- 28: Nabe
- 29: Dämpfungseinrichtung
- A: axiale Richtung
- R: radiale Richtung
- U: Umfangsrichtung

## Patentansprüche

1. Kupplungsvorrichtung (1), insbesondere für einen Antriebsstrang eines Kraftfahrzeugs, mit einer Gegendruckplatte (2) und einer durch zumindest ein Hebelelement (16) in axialer Richtung (A) der Kupplungsvorrichtung (1) begrenzt verlagerbaren Anpressplatte (7) zur reibschlüssigen Klemmung einer Kupplungsscheibe (26) zwischen der Gegendruckplatte (2) und der Anpressplatte (7), wobei die Gegendruckplatte (2) zumindest einen sich im Wesentlichen in axialer Richtung (A) erstreckenden Laschenabschnitt (4) aufweist, mit dem ein Deckelbauteil (19) verbunden ist, wobei die Gegendruckplatte (2) eine Reibfläche (3) aufweist, mit der die Kupplungsscheibe (26) beim Einrücken der Kupplungsvorrichtung (1) in reibschlüssige Anlage bringbar ist, und das Deckelbauteil (19) auf einer Stirnseite (5) des sich im Wesentlichen rechtwinklig zur Reibfläche (3) der Gegendruckplatte (2) erstreckenden Laschenabschnitts (4) angeordnet ist, **dadurch gekennzeichnet, dass** der Laschenabschnitt (4) mittels Umformung hergestellt ist.

2. Kupplungsvorrichtung (1) nach Anspruch 1, wobei die Gegendruckplatte (2) mehrere in Umfangsrichtung (U) der Kupplungsvorrichtung (1), vorzugsweise gleichmäßig, voneinander beabstandete Laschenabschnitte (4) aufweist, die einteilig mit der Gegendruckplatte (2) ausgebildet sind und auf einer Kreisbahn angeordnet sind.

3. Kupplungsvorrichtung (1) nach Anspruch 1 oder 2, wobei in die Stirnseite (5) des Laschenabschnitts (4) ein Loch, vorzugsweise ein Sackloch (6), eingebracht, vorzugsweise eingedornt, ist, mittels dessen das Deckelbauteil (19) mit der Gegendruckplatte (2) verbindbar ist.

4. Kupplungsvorrichtung (1) nach Anspruch 3, wobei das Deckelbauteil (19) mittels einer, vorzugsweise selbstfurchenden, im Loch eingebrachten Schraube (22) mit der Gegendruckplatte (2) verbunden ist.

5. Kupplungsvorrichtung (1) nach zumindest einem der Ansprüche 1 bis 4, wobei der Laschenabschnitt (4) sich in axialer Richtung (A) durch die Anpressplatte (7) hindurch erstreckt, und vorzugsweise der Laschenabschnitt (4) zur Übertragung eines Drehmoments auf die Anpressplatte (7) in einer Durchbrechung (12) der Anpressplatte (7) anliegt.

6. Kupplungsvorrichtung (1) nach zumindest einem der Ansprüche 1 bis 5, wobei der Laschenabschnitt (4) sich in axialer Richtung (A) durch das Hebelelement (16) hindurch erstreckt, und vorzugsweise das Hebelelement (16) durch Anlage am Laschenabschnitt (4) zumindest in Umfangsrichtung (U) ausgerichtet ist.

7. Kupplungsvorrichtung (1) nach zumindest einem der Ansprüche 1 bis 6, wobei das Hebelelement (16) zumindest einen Federabschnitt (18) aufweist, der sich zur Vorspannung des Hebelelements (16) und/oder zur Zentrierung des Hebelelements (16) mit dem Deckelbauteil (19) in Eingriff befindet.

8. Kupplungsvorrichtung (1) nach zumindest einem der Ansprüche 1 bis 7, wobei das Deckelbauteil (19) ringförmig ausgebildet ist, und vorzugsweise zumindest ein sich in axialer Richtung (A) und/oder in radialer Richtung (R) der Kupplungsvorrichtung (1) erstreckender Zentrierabschnitt (21) am Deckelbauteil (19) vorgesehen ist, der das Hebelelement (16) zentriert.

9. Kupplungsvorrichtung (1) nach zumindest einem der Ansprüche 1 bis 8, wobei das Hebelelement (16) zumindest einen Hebelarm (17) aufweist, der, vorzugsweise zum Ausrücken der Kupplungsvorrichtung (1), in die Anpressplatte (7), vorzugsweise in einen in radialer Richtung (R) außen ausgebildeten, sich in axialer Richtung (A) erstreckenden, vorzugsweise mittels Umformung hergestellten, Kragenabschnitt (9) der Anpressplatte (7), eingreift.

10. Kupplungsvorrichtung (1) nach zumindest einem der Ansprüche 1 bis 9, wobei eine ringförmige Tellerfeder (23) zwischen dem Hebelelement (16) und der Anpressplatte (7) zur Vorspannung der Anpressplatte (7) in axialer Richtung (A) angeordnet ist, und vorzugsweise die Tellerfeder (23) in ihrem radialen Außenbereich (24) am Hebelelement (16) und in ihrem radialen Innenbereich (25) an der Anpressplatte (7) anliegt, wobei vorzugsweise die Tellerfeder (23) durch einen in radialer Richtung (R) innen ausgebildeten, sich in axialer Richtung (A) erstreckenden, vorzugsweise mittels Umformung hergestellten, Kragenabschnitt (10) der Anpressplatte (7), zentriert ist.

## Claims

1. Clutch apparatus (1), in particular for a drive train of a motor vehicle, having a counterpressure plate (2) and a pressing plate (7) which can be moved to a limited extent in the axial direction (A) of the clutch apparatus (1) by way of at least one lever element (16) for clamping a clutch disc (26) in a frictionally locking manner between the counterpressure plate (2) and the pressing plate (7), the counterpressure plate (2) having at least one tab section (4) which extends substantially in the axial direction (A) and to which a cover component (19) is connected, the counterpressure plate (2) having a friction face (3), with which the clutch disc (26) can be brought into frictionally locking contact in the case of the engagement of the clutch apparatus (1), and the cover component (19) being arranged on an end side (5) of the tab section (4) which extends substantially at a right angle with respect to the friction face (3) of the counterpressure plate (2), **characterized in that** the tab section (4) is produced by means of forming.

2. Clutch apparatus (1) according to Claim 1, the counterpressure plate (2) having a plurality of tab sections (4) which are spaced apart from one another, preferably uniformly, in the circumferential direction (U) of the clutch apparatus (1), are configured in one piece with the counterpressure plate (2), and are arranged on a circular path.

3. Clutch apparatus (1) according to Claim 1 or 2, a hole, preferably a blind hole (6) being made, preferably by mandrel, in the end side (5) of the tab section (4), by means of which hole the cover component (19) can be connected to the counterpressure plate (2).

4. Clutch apparatus (1) according to Claim 3, the cover component (19) being connected to the counterpressure plate (2) by means of a screw (22) which is introduced into the hole and is preferably self-tapping.

5. Clutch apparatus (1) according to at least one of Claims 1 to 4, the tab section (4) extending in the axial direction (A) through the pressing plate (7), and the tab section (4) preferably fitting in an aperture (12) of the pressing plate (7) for the transmission of a torque to the pressing plate (7).

6. Clutch apparatus (1) according to at least one of Claims 1 to 5, the tab section (4) extending in the axial direction (A) through the lever element (16), and the lever element (16) preferably being oriented by way of bearing against the tab section (4) at least in the circumferential direction (U).

7. Clutch apparatus (1) according to at least one of Claims 1 to 6, the lever element (16) having at least one spring section (18) which is in engagement with the cover component (19) for prestressing the lever element (16) and/or for centring the lever element (16).

8. Clutch apparatus (1) according to at least one of Claims 1 to 7, the cover component (19) being of annular configuration, and at least one centring section (21) which extends in the axial direction (A) and/or in the radial direction (R) of the clutch apparatus (1) preferably being provided on the cover component (19), which centring section (21) centres the lever element (16) .

9. Clutch apparatus (1) according to at least one of Claims 1 to 8, the lever element (16) having at least one lever arm (17) which engages, preferably in order to disengage the clutch apparatus (1), into the pressing plate (7), preferably into a collar section (9) of the pressing plate (7), which collar section (9) is configured on the outside in the radial direction (R), extends in the axial direction (A), and is preferably produced by means of forming.

10. Clutch apparatus (1) according to at least one of Claims 1 to 9, an annular cup spring (23) being arranged between the lever element (16) and the pressing plate (7) in order to prestress the pressing plate (7) in the axial direction (A), and the cup spring (23) preferably bearing in its radial outer region (24) against the lever element (16) and in its radial inner region (25) against the pressing plate (7), the cup spring (23) preferably being centred by way of a collar section (10) of the pressing plate (7), which collar section (10) is configured on the inside in the radial direction (R), extends in the axial direction (A), and is preferably produced by means of forming.

## Revendications

1. Dispositif d'accouplement (1), destiné en particulier à une chaîne cinématique d'un véhicule automobile, ledit dispositif comprenant une plaque de contre-pression (2) et une plaque de pression (7) qui est déplaçable de façon limitée par le biais d'au moins un élément formant levier (16) dans la direction axiale (A) du dispositif d'accouplement (1) et qui est destinée à serrer par friction un disque d'embrayage (26) entre la plaque de contre-pression (2) et la plaque de pression (7), la plaque de contre-pression (2) comportant au moins une partie formant languette (4) qui s'étend sensiblement dans la direction axiale (A) à laquelle est relié un composant formant capot (19), la plaque de contre-pression (2) comportant une surface de friction (3) avec laquelle le disque d'embrayage (26) est amené en appui de friction lors de l'engagement du dispositif d'accouplement (1) et le composant formant capot (19) étant disposé sur un côté frontal (5) de la partie formant languette (4) qui s'étend sensiblement perpendiculairement à la surface de friction (3) de la plaque de contre-pression (2), **caractérisé en ce que** la partie formant languette (4) est réalisée par formage.

2. Dispositif d'accouplement (1) selon la revendication 1, la plaque de contre-pression (2) comportant une pluralité de parties formant languettes (4) espacées les unes des autres, de préférence uniformément, dans la direction périphérique (U) du dispositif d'accouplement (1), qui sont conçues d'une seule pièce avec la plaque de contre-pression (2) et sont disposées sur une trajectoire circulaire.

3. Dispositif d'accouplement (1) selon la revendication 1 ou 2, un trou, de préférence un trou borgne (6), étant ménagé, de préférence mandriné, dans le côté frontal (5) de la partie formant languette (4), trou au moyen duquel le composant formant capot (19) peut être relié à la plaque de contre-pression (2).

4. Dispositif d'accouplement (1) selon la revendication 3, le composant formant capot (19) étant relié à la plaque de contre-pression (2) à l'aide d'une vis (22), de préférence auto-taraudante, qui est introduite dans le trou.

5. Dispositif d'accouplement (1) selon l'une au moins des revendications 1 à 4, la partie formant languette (4) s'étendant dans la direction axiale (A) à travers la plaque de pression (7), et pour transmettre un couple à la plaque de pression (7) , de préférence la partie formant languette (4) venant en appui dans un passage (12) de la plaque de pression (7).

6. Dispositif d'accouplement (1) selon l'une au moins des revendications 1 à 5, la partie formant languette (4) s'étendant dans la direction axiale (A) à travers l'élément formant levier (16), et de préférence l'élément formant levier (16) étant orienté au moins dans la direction périphérique (U) par appui sur la partie formant languette (4).

7. Dispositif d'accouplement (1) selon l'une au moins des revendications 1 à 6, l'élément formant levier (16) comportant au moins une partie à ressort (18) qui est en engagement avec le composant formant capot (19) pour précontraindre l'élément formant levier (16) et/ou pour centrer l'élément formant levier (16).

8. Dispositif d'accouplement (1) selon l'une au moins des revendications 1 à 7, le composant formant capot (19) étant conçu de manière annulaire, et de préférence au moins une partie de centrage (21), qui s'étend dans la direction axiale (A) et/ou dans une direction radiale (R) du dispositif d'accouplement (1), étant prévue sur le composant formant capot (19) qui centre l'élément formant levier (16).

9. Dispositif d'accouplement (1) selon l'une au moins des revendications 1 à 8, l'élément formant levier (16) comportant au moins un bras de levier (17) qui s'engage, de préférence pour désaccoupler le dispositif d'accouplement (1), dans la plaque de pression (7), de préférence dans une partie formant collerette (9) de la plaque de pression (7), qui est formée extérieurement dans une direction radiale (R), qui s'étend dans la direction axiale (A) et qui est fabriquée de préférence par formage.

10. Dispositif d'accouplement (1) selon l'une au moins des revendications 1 à 9, une rondelle-ressort annulaire (23) étant disposée entre l'élément formant levier (16) et la plaque de pression (7) pour précontraindre la plaque de pression (7) dans la direction axiale (A), et de préférence la rondelle-ressort (23) venant en appui dans sa région extérieure radiale (24) sur l'élément formant levier (16) et dans sa région intérieure radiale (25) sur la plaque de pression (7), de préférence la rondelle-ressort (23) étant centrée par une partie formant collerette (10) de la plaque de pression (7), qui est formée intérieurement dans une direction radiale (R), qui s'étend dans la direction axiale (A) et qui est fabriquée de préférence par formage.
